# EUROPEAN PATENT APPLICATION

(11) **EP 1 912 205 A2**
(43) Date of publication of application: **16.04.2008**
(21) Application number: 07019549.0
(22) Date of filing: 05.10.2007
(51) Int. Cl.: G10L 15/26

(54) **Adaptive context for automatic speech recognition systems**

(30) Priority: 12.10.2006 US 851149 P
(71) Applicant: QNX Software Systems (Wavemakers), Inc., Vancouver BC V6B 2K4 (CA); Harman Becker Automotive Systems GmbH, 76307 Karlsbad (DE)
(72) Inventor: Rempel, Rod, Port Coquitlam British Columbia V3C 6G7 (CA); Hetherington, Phillip, Port Moody British Columbia V3H 5H7 (CA); Hennecke, Marcus, 89075 Ulm (DE); Willett, Daniel, 65396 Walluf (DE)
(74) Representative: Grünecker, Kinkeldey, Stockmair & Schwanhäusser Anwaltssozietät

(57) **Abstract**

A system improves speech recognition includes an interface linked to a speech recognition engine. A post-recognition processor coupled to the interface compares recognized speech data generated by the speech recognition engine to contextual information retained in a memory, generates a modified recognized speech data, and transmits the modified recognized speech data to a parsing component.

## Description

### BACKGROUND OF THE INVENTION

### 1. Priority Claim.

This application claims the benefit of priority from U.S. Provisional Application No. 60/851,149, filed October 12, 2006, which is incorporated by reference.

### 2. Technical Field.

The invention relates to communication systems, and more particularly, to systems that improve speech recognition.

### 3. Related Art.

Some speech recognition systems interact with an application through an exchange. These systems understand a limited number of spoken requests and commands. Since there are a variety of speech patterns, speaker accents, and application environments some speech recognition systems do not always recognize a user's speech. Some systems attempt to minimize errors by requiring users to pronounce multiple words and sentences to train the system before use. Other systems adapt their speech models while the system is in use. Since there are a variety of ways in which a request or a command may be made, speech recognition system developers must generate an initial recognition grammar.

In spite of this programming, some systems are not capable of effectively adapting to available contextual information. Therefore, a need exists for a system that improves speech recognition.

### SUMMARY

A system improves speech recognition includes an interface linked to a speech recognition engine. A post-recognition processor coupled to the interface compares recognized speech processed by the speech recognition engine to contextual information retained in a memory. The post-recognition processor generates a modified recognized speech data, and transmits the modified recognized speech data to a parsing component.

Other systems, methods, features and advantages will be, or will become, apparent to one with skill in the art upon examination of the following figures and detailed description. It is intended that all such additional systems, methods, features and advantages be included within this description, be within the scope of the invention, and be protected by the following claims.

### BRIEF DESCRIPTION OF THE DRAWINGS

The system may be better understood with reference to the following drawings and description. The components in the figures are not necessarily to scale, emphasis instead being placed upon illustrating the principles of the invention. Moreover, in the figures, like referenced numerals designate corresponding parts throughout the different views.

Figure 1 is a block diagram of an automatic speech recognition system coupled to a post-recognition system.

Figure 2 is a block diagram of a post-recognition system.

Figure 3 is a diagram of an n-best list.

Figure 4 is a block diagram of a post-recoginition system coupled to a peripheral device.

Figure 5 is a block diagram of an alternate post-recognition system.

Figure 6 is a block diagram of an alternate automatic speech recognition system.

Figure 7 is a block diagram of a second alternate automatic speech recognition system.

Figure 8 is a flow diagram that improves speech recognition.

### DETAILED DESCRIPTION OF THE PREFERRED EMBODIMENTS

An adaptive post-recognition system is capable of adapting to words, phrases, and/or sentences. The system may edit speech recognized from an audio signal or modify a recognition score associated with recognized speech. Some post-recognition systems edit or modify data in real time or near real time through interactions. Other post-recognition systems edit or modify data through user correction, or a combination of user correction and user interaction in real time or near real time. The post-recognition system may interface speaker-dependent and/or speaker-independent automatic speech recognition systems (SRS).

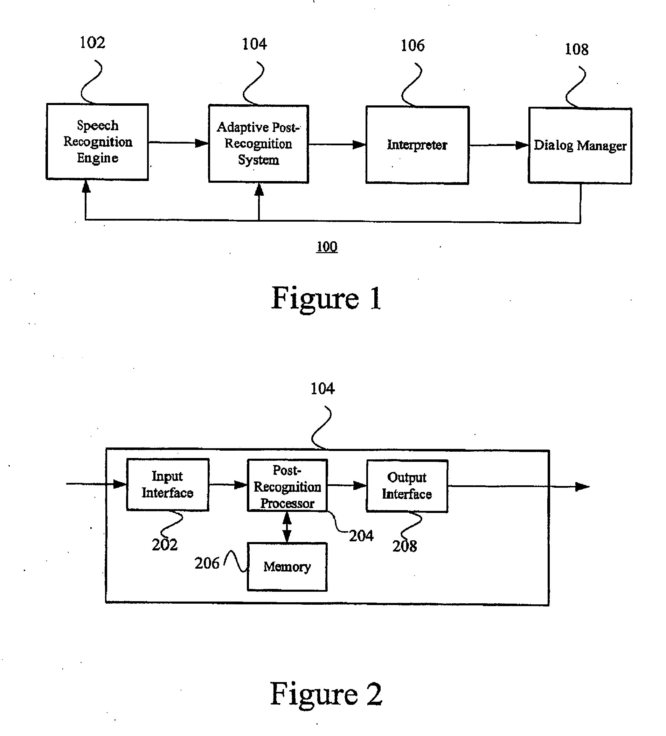

Figure 1 is a block diagram of an adaptive automatic speech recognition system 100. The adaptive automatic speech recognition system 100 may include a speech recognition engine 102, an adaptive post-recognition system 104, an interpreter 106, and a dialog manager 108, The speech recognition engine 102 receives a digital audio signal and through a matching process generates recognized speech data received by the adaptive post-recognition system 104. Some speech recognition engines 102 may receive an analog audio signal which may be digitized prior to the matching process. In some adaptive automatic speech recognition systems 100, the recognized speech data may comprise one or more textual strings, probabilities or confidence values/levels for each textual string (e.g., a score), and/or other data fields that convey meaning to internal or external hardware and/or software. Some adaptive automatic speech recognition systems 100 present the recognized speech data as an n-best list of textual strings that are likely to match a user's utterance, where the number of entries ("n") in the best list may be configured by a user, original equipment manufacturer, and/or an after market supplier. Alternatively, some adaptive automatic speech recognition systems 100. may present the recognized speech data as word graphs, word matrices, or word lattices that represent one or more possible user utterances.

The adaptive post-recognition system 104 comprises software and/or hardware that is coupled to or is a unitary part of the speech recognition engine 102. The adaptive post-recognition system 104 analyzes the recognized speech data in view of available contextual objects and determines whether to modify some or all of the recognized speech data. When modification is warranted, the adaptive post-recognition processor 104 may alter a score associated with a textual string, the textual string, and/or other data fields to generate modified recognized speech data.

The interpreter 106 receives the modified recognized speech data, and converts the data into a form that may be processed by second tier software and/or hardware. In some adaptive automatic speech recognition systems 100, the interpreter 106 may be a parser. The dialog manager 108 may receive the data output from the interpreter 106 and may interpret the data to provide a control and/or input signal to one or more linked devices or applications. Additionally, the dialog manager 108 may provide response feedback data to the adaptive post-recognition system 104 and/or the speech recognition engine 102. The response feedback data may be stored in an external and/or internal volatile or non-volatile memory and may comprise an acceptance level of a modified textual string. In some adaptive automatic speech recognition systems 100, the response feedback may comprise data indicating an affirmative acceptance (e.g., yes, correct, continue, proceed, etc.) or a negative acceptance (e.g., no, incorrect, stop, redo, cancel, etc.).

Figure 2 is a block diagram of an adaptive post-recognition system 104. The adaptive post-recognition system 104 may include an input interface 202, a post-recognition processor 204, a memory 206, and an output interface 208. The input interface couples the speech recognition engine 102 and passes recognized speech data to the post-recognition processor 204 which stores the recognized speech data in a volatile or non-volatile memory 206. Memory 206 may also store contextual objects and/or one or more application rules which may be configured or adapted by an end-user, developer, original equipment manufacturer, and/or an after-market service provider. In some adaptive post-recflgnition systems 104, a contextual object comprises response feedback data, frequently spoken words, phrases, or sentences (e.g., recognized textual strings and/or modified recognized textual strings), scores, temporal data (e.g., when was the data relevantly addressed), frequency data (e.g., how often is the data addressed), and/or recency data (e.g., when was the data last addressed).

The post-recognition processor 204 may apply one or more application rules to the recognized speech data and one or more contextual objects. Based on the results of the applied application rules, the post-recognition processor 204 may generate modified recognition speech data. The modified recognition speech data may comprise scores, modified scores, recognized text strings, modified recognized text strings, and/or other data fields that convey meaning to internal or ancillary hardware and/or other software. In some adaptive post-recognition systems 104, the modified recognition speech data may be presented as an n-best list. The modified recognition speech data may be passed to a second tier software and/or device coupled to the output interface 208, such as an interpreter 106.

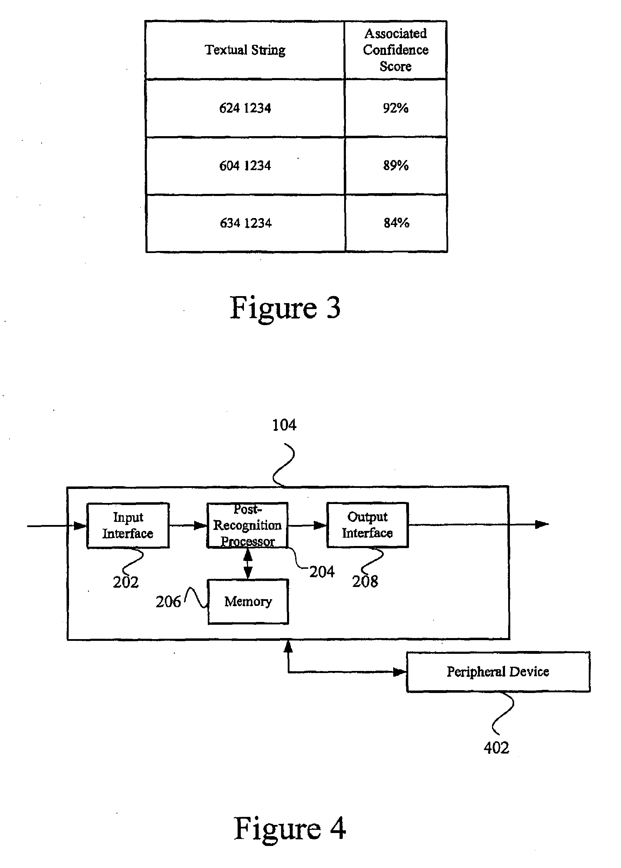

In adaptive automatic speech recognition systems 100 that present the recognized speech data as an n-best list, modification of a score may change the position of a textual string and its associated data. Figure 3 is an exemplary representation of an n-best phone digit dialing list generated by a speech recognition engine 102 in response to the spoken phone number "604 1234." In figure 3, the textual string "624 1234" has a 92% confidence score, the textual string "604 1234" has a 89% confidence score, and the textual string "634 1234" has a 84% confidence score. A post-recognition processor 204 may apply an application rule to the textual string "624 1234." The application rule may comprise contextual logic. In some systems, the application rule may determine if negative response feedback has previously been associated with this textual string or if this textual string represents a frequently dialed phone number. If a user has previously provided a negative response to this textual string, which is stored as a contextual object in a memory, the post-recognition processor 204 may modify the associated confidence score with a negative weight. The negative weight may comprise decreasing the associated confidence score a predetermined amount. If the associated confidence score is decreased by an amount greater than the second best entry in the n-best list (e.g., 3%, as shown in figure 3), textual string "624 1234" would become the second entry in the n-best list shown in figure 3. Additional application rules may be applied to this textual string which may cause additional position changes.

An application rule applied to another textual string may return a different result. For example, 604-1234 may be a frequently dialed number having contextual objects stored in memory 206 indicating such. When the post-recognition processor 204 applies an application rule to textual string "604 1234," the contextual objects indicating that this is a frequently dialed number may cause the post-recognition processor 204 to modify the associated confidence score with a positive weight. The positive weight may comprise increasing the associated confidence score a predetermined amount. The value of a positive and/or negative weight may be configured based on frequency data, temporal data, recency data, and/or other temporal indicators associated with a contextual object or subcomponents of a contextual object. In some adaptive automatic speech recognition systems 100, the post-recognition processor 204 may be configured such that the application rules pass recognition speech data without any modifications. In these adaptive speech recognition systems 100, the adaptive post-recognition system 104 may perform as pass through logic.

In some adaptive post-recognition systems 104, contextual objects may be used to insert new information into the recognized speech data. For example, if the telephone number 765-4321 has been dialed repeatedly recently, contextual objects indicating such may be stored in a memory. If the recognized speech data comprises an n-best list with the textual string "769 4321" as the first entry (e.g., the most likely result) which has no contextual objects stored in a memory, an application rule may result in the post-recognition processor 204 inserting the textual string "765 4321" into the n-best list The location where the new data is inserted and/or an associated score may depend on a number of factors. These factors may include the frequency data, temporal data, and/or recency data of the new information to be added.

In some adaptive post-recognition systems 104 contextual objects may be used to remove data from the recognized speech data. Some speech recognition engines 102 may misrecognize environmental noises, such as transient vehicle noises (e.g., road bumps, wind buffets, rain noises, etc.) and/or background noises (e.g., keyboard clicks, musical noise, etc.), as part of a spoken utterance. These environmental noises, may add undesired data to a textual string included in recognized speech data. Upon applying an application rule and contextual objects, the post-recognition processor 204 may generate modified recognized data by identifying the unwanted data and extracting it from the textual string.

In a post-recognition system 104, the application rules stored in memory may be pre-programmed, acquired or modified through user interaction, or acquired or modified through local (e.g., rule grammar, dialog manager, etc.) or remote sources, such as a peripheral device, through a wireless or hardwire connection. The application rules may be adapted, for example based on feedback from a higher level application software and/or hardware, or by user action. If an error is caused by an application rule, the application rule may be dynamically updated or modified and stored in the memory.

Other contextual objects may be loaded into memory from one or more peripheral devices. Figure 4 is an adaptive post-recognition system coupled to a peripheral device. The adaptive post-recognition system 104 may coupled to the peripheral device 402 through one or more protocols used by a wired or wireless connection. Some protocols may comprise J1850VPW, J1850PWM, ISO, IS09141-2, IS014230, CAN, High Speed CAN, MOST, LIN, IDB-1394, IDB-C, Bluetooth, TTCAN, TTP, 802.x, serial data transmission, and/or parallel data transmission. The peripheral device may comprise a cellular or wireless telephone, a vehicle on-board computer, an infotainment system, a portable audio/visual device, such as an MP3 player, a personal digital assistant, and/or any other processing or data storage computer which may be running one or more software applications. When the adaptive post-recognition system 104 couples to a peripheral device other contextual objects may be pushed by the peripheral device to the adaptive post-recognition system 104. Other contextual objects may include contact information and lists, personal identification numbers or codes, calendar information, addresses, radio frequencies, radio station call letters, radio station preset locations, song titles (compressed or uncompressed), climate control commands, global positioning information, or any other entity related to speech recognition, personal communication, vehicle operation, or driver or passenger comfort. Contextual objects may be added to the memory or updated automatically when a user corrects, accepts, or rejects a speech output provide by the adaptive automatic speech recognition system.

Some adaptive post-recognition systems 104 avoid reinforcing errors common to some speech recognition systems by adding or modifying contextual objects under limited conditions. In some systems, new contextual objects may be added or existing contextual objects updated only after being confirmed by a user. In some systems unconfirmed additions or changes may be stored as separate contextual objects in a memory; however these unconfirmed contextual objects may have lower scores than confirmed choices. In some systems unconfirmed and/or rejected items may be added or updated with negative weights, acting to reduce the likelihood or suppress the potentially wrong result for some period of time.

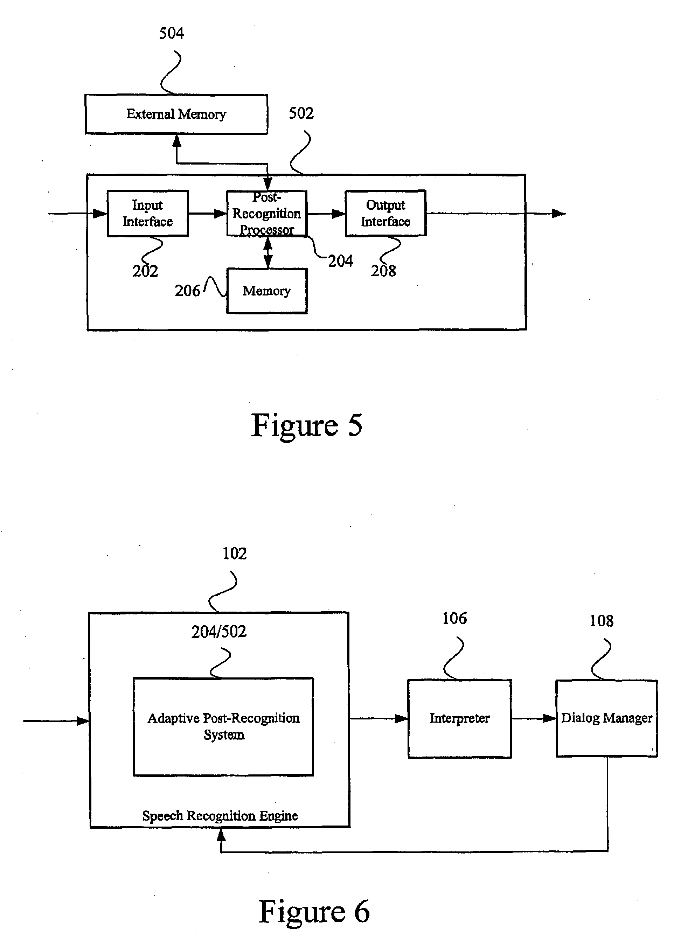

Figure 5 is an alternate adaptive post-recognidan system 502. In figure 5, an external 504 memory is in communication with the post-recognition processor 202. The internal memory 206 and/or the external memory 504 may store recognized speech data, application rules, contextual objects, and/or modified recognized speech data. The internal memory 206 and/or external 504 memory may be a volatile or non-volatile memory and may comprise one or more memory spaces.

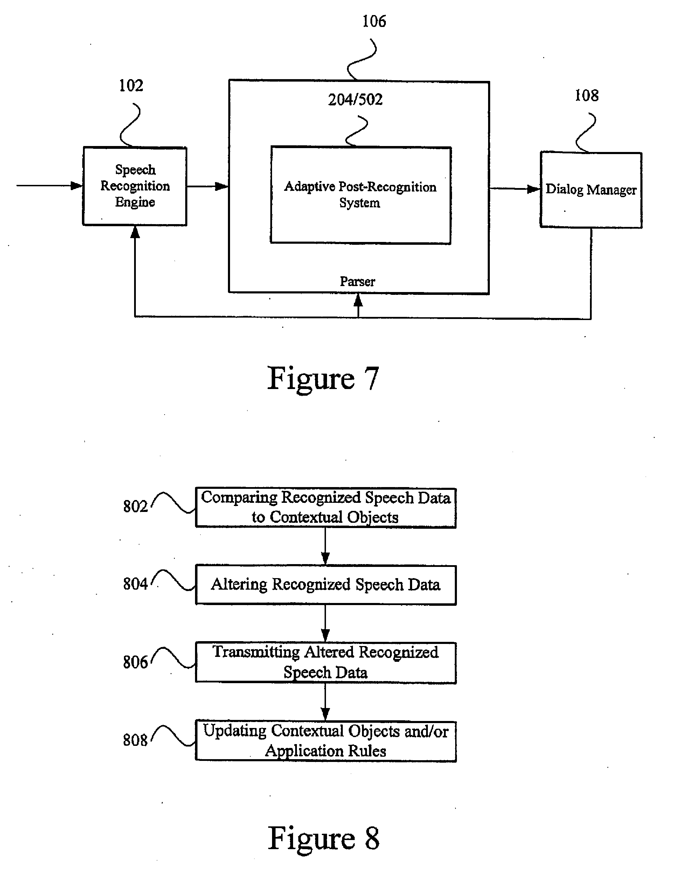

Figure 6 is an alternate adaptive automatic speech recognition system. In figure 6, the post-recognition systems 204 or 502 may be integrated with or form a unitary part of a speech recognition engine 102. Figure 7 is a second alternate adaptive automatic speech recognition system. In figure 7, the post-recognition systems 204 or 502 may be integrated with or form a unitary part of an interpreter 106.

Figure 8 is a flow diagram of a method that improves speech recognition. At act 802, an adaptive post-recognition system may compare recognized speech data generated by a speech recognition engine to contextual objects. The recognized speech data may be generated by a speaker-dependent and/or speaker-independent system, such that the contextual objects may be speech recently spoken by a current user, or may be speech spoken within a predetermined or programmed time period by a user other than the current user. Alternatively, the contextual objects may be information acquired from one or more peripheral devices. The post-recognition systems may use one or more application rules in performing the comparison. In some methods of improving speech recognition, the recognized speech data, contextual objects, and/or the application rules may be stored in a volatile or non-volatile memory. The recognized speech data may comprise one or more textual strings, probabilities or confidence values/levels for each textual string (e.g., a score), and/or other data fields that convey meaning to internal or external hardware and/or software. The contextual objects may be used to clear up ambiguities pertaining to the recognized speech data, and may comprise response feedback data, frequently spoken words, phrases, or sentences (e.g., recognized textual strings and/or modified recognized textual strings), scores, temporal data, frequency data, and/or receny data. Other contextual objects may comprise contact information and lists, personal identification numbers or codes, calendar information, addresses, radio frequencies, radio station call letters, radio station preset locations, song titles (compressed or uncompressed), climate control commands, global positioning information, and/or any other entity related to speech recognition, personal communication, vehicle operation, or driver or passenger comfort which may be loaded into a memory from one or more peripheral devices.

At act 804, based on one or more of the application rules and/or the contextual objects, some or all of the recognized speech data may be altered. Altering the recognized speech data may comprise modifying a score associated with a textual string by applying a positive or negative weighting value; adding, removing, or altering a portion of a textual string, and/or adding a new textual string and/or a score associated with a textual string.

At act 806, some or all of the altered recognized speech data may be transmitted to higher level software and/or a device. A higher level device may comprise an interpreter which may convert the altered recognized speech data into a form that may be processed by other higher level software and/or hardware.

At act 808, contextual objects and/or application rules may be updated. In some methods, the contextual objects and/or the application rules may be updated automatically when a user corrects, accepts, or rejects data output by an adaptive automatic speech recognition system. If the corrected output includes words or phrases that are stored as a contextual object, the words may be added to the contextual objects. If an error is caused by an application rule, the application rule may be statically or dynamically updated or modified and stored in a memory.

Some methods avoid reinforcing errors common to some speech recognition systems by adding or modifying contextual objects under limited conditions. In some systems, new contextual objects may be added or existing contextual objects updated only after being confirmed by a user. In some methods unconfirmed additions or changes may be stored as separate contextual objects in a memory, however these unconfirmed contextual objects may have lower scores than confirmed choices.

The systems and methods described above may be encoded in a computer readable medium such as a CD-Rom, disk, flash memory, RAM or ROM, or other machine readable medium as instructions for execution by a processor. Accordingly, the processor may execute the instructions to perform post-recognition processing. Alternatively or additionally, the methods may be implemented as analog or digital logic using hardware, such as one or more integrated circuits, or one or more processors executing sampling rate adaptation instructions; or in software in an application programming interface (API) or in a Dynamic Link Library (DLL), functions available in a shared memory or defined as local or remote procedure calls; or as a combination of hardware and software.

The methods may be encoded on a computer-readable medium, machine-readable medium, propagated-signal medium, and/or signal-bearing medium. The media may comprise any device that contains, stores, communicates, propagates, or transports software for use by or in connection with an instruction executable system, apparatus, or device. The machine-readable medium may selectively be, but is not limited to, an electronic, magnetic, optical, electromagnetic, infrared, or semiconductor system, apparatus, device, or propagation medium. A non-exhaustive list of examples of a machine-readable medium includes: an electrical connection having one or more wires, a portable magnetic or optical disk, a volatile memory such as a Random Access Memory "RAM", a Read-Only Memory "ROM," an Erasable Programmable Read-Only Memory (e.g., EPROM) or Flash memory, or an optical fiber. A machine-readable medium may also include a tangible medium upon which executable instructions are printed, as the logic may be electronically stored as an image or in another format (e.g., through an optical scan), then compiled, and/or interpreted or otherwise processed. The processed medium may then be stored in a computer and/or machine memory.

The systems above may include additional or different logic and may be implemented in many different ways. A processor may be implemented as a microprocessor, microcontroller, application specific integrated circuit (ASIC), discrete logic, or a combination of other types of circuits or logic. Similarly, memories may be DRAM, SRAM, Flash, or other types of memory. Parameters (e.g., conditions and thresholds), and other data structures may be separately stored and managed, may be incorporated into a single memory one or more databases, or may be logically and physically distributed across many components. Programs and instruction sets may be parts of a single program, separate programs, or distributed across several memories and processors. The systems and methods described above may be applied to re-score and/or re-weigh recognized speech data that is presented in word graph path, word matrix, and/or word lattice formats, or any other generally recognized format used to represent results from a speech recognition system.

While various embodiments of the invention have been described, it will be apparent to those of ordinary skill in the art that many more embodiments and implementations are possible within the scope of the invention. Accordingly, the invention is not to be restricted except in light of the attached claims and their equivalents.

## Claims

1. A system that improves speech recognition performance, comprising:
an interface configured to couple a speech recognition engine; and
a post-recognition processor coupled to the interface that compares recognized speech data generated by the speech recognition engine to contextual objects retained in a memory, generates a modified recognized speech data, and transmits the modified recognized speech data to a interpreting component.

2. The system of claim 1, where the recognized speech data comprises a textual string and an associated score.

3. The system of claim 2, where the score comprises a confidence value of the textual string.

4. The system of claim 3, where the modified recognized speech data comprises the associated score altered by a negative weighting value.

5. The system of claim 3, where the modified recognized speech data comprise the associated score altered by a positive weighting value.

6. The system of claim 1, where the modified recognized speech data comprises a modified textual string, the modified textual string comprising a portion of a contextual object.

7. The system of claim 2, where the modified recognized speech data comprises a portion of the textual string.

8. The system of claim 1, where the memory is further configured to store response feedback data, the response feedback data comprising an acceptance level of a modified textual string.

9. The system of claim 2, where the modified recognized speech data comprises a plurality of textual strings ordered differently than textual strings of the recognized speech data.

10. The system of claim 1, where the contextual objects are loaded into the memory from one or more peripheral devices.

11. The system of claim 1, further comprising user adaptable rules stored in memory, the user adaptable rules configured to operate on the recognized speech data and the contextual objects.

12. A method that improves speech recognition, comprising:
comparing recognized speech data generated by a speech recognition engine to contextual objects retained in a memory;
altering the recognized speech data based on one or more contextual objects; and
transmitting the altered recognized speech data to a interpreting component,
where the recognized speech data comprises a textual string, matrix, or lattice and an associated confidence level.

13. The method of claim 12, where altering the recognized speech data comprises adjusting the associated confidence level associated with a textual string, matrix or lattice.

14. The method of claim 13, where adjusting a confidence level associated with a textual string comprises applying a negative weighting value to the associated confidence level.

15. The method of claim 13, where adjusting a confidence level associated with a textual string comprises applying a positive weighting value to the associated confidence level.

16. The method of claim 12, where altering the recognized speech data comprises extracting a portion of a textual string.

17. The method of claim 12, where altering the recognized speech data comprises adding a new textual string to the recognized speech data.

18. The method of claim 12, where the new textual string is added to the contextual objects retained in memory after receiving confirmation data.

19. The method of claim 12, further comprising updating the contextual objects with a portion of the altered recognized speech data.

20. The method of claim 12, where comparing recognized speech data generated by the speech recognition engine to contextual objects retained in memory comprises evaluating temporal data associated with the contextual objects.

21. The method of claim 12, where comparing recognized speech data generated by the speech recognition engine to contextual objects retained in memory comprises evaluating frequency data associated with the contextual objects

22. A computer readable storage medium comprising a set of processor executable instructions to execute the following acts:
comparing recognized speech data generated by a speech recognition engine to contextual objects retained in a memory;
altering the recognized speech data based on one or more contextual objects; and
transmitting the altered recognized speech data to an interpreting component,
where the recognized speech data comprises a textual string and an associated confidence level.

23. The computer readable storage medium of claim 22 where the instruction altering the recognized speech data applies a negative weighting value to the associated confidence level.

24. The computer readable storage medium of claim 22 where the instruction altering the recognized speech data applies a positive weighting value to the associated confidence level.
